# EUROPEAN PATENT APPLICATION

(11) **EP 4 428 715 A1**
(43) Date of publication of application: **11.09.2024**
(21) Application number: 23187226.8
(22) Date of filing: 24.07.2023
(51) Int. Cl.: G06F 16/93, H04L 51/216, G06Q 10/107

(54) **INFORMATION PROCESSING APPARATUS, PROGRAM, AND INFORMATION PROCESSING METHOD**

(30) Priority: 07.03.2023 JP 2023034966
(71) Applicant: FUJIFILM Business Innovation Corp., Minato-ku Tokyo (JP)
(72) Inventor: HAGA, Mai, Yokohama-shi, Kanagawa (JP)
(74) Representative: Kurig, Thomas

(57) **Abstract**

An information processing apparatus includes: a processor configured to: receive, in a message exchange service for exchanging a message and a document attached to the message, designation of a range of target messages from a user; extract documents included in the range, and receive a first document designated by the user from among the extracted documents; present, to the user, second documents that are documents related to the first document from among the extracted documents; and receive a document designated by the user from among the second documents, and perform version management of the designated document together with the first document.

## Description

### BACKGROUND OF THE INVENTION

### (i) Field of the Invention

The present invention relates to an information processing apparatus, a program, and an information processing method.

### (ii) Description of Related Art

In a message exchange service for exchanging messages by attaching documents, the attached documents may be revised. In this case, in a process of exchanging messages, by revising one original document (hereinafter, appropriately referred to as an "original document"), one or a plurality of revised versions (that is, new documents created by revising the original document, also called versions) are created. In such a case, in order to confirm a history of revision of one document created as a final result, not only the finally-created document but also the original document, a specific document with a revised version, exchanged messages, and the like may be referred to.

JP2019-128689A discloses an information processing apparatus that extracts and presents a history of revision of an attached document from exchanged messages in a communication tool in which message exchange is performed.

### SUMMARY OF THE INVENTION

By the way, in the message exchange service, even in a case where revised version documents are created with respect to the original document as described above, it may be difficult to determine whether the document is a revised version document or a document unrelated to the original document. For example, depending on a function of a tool used in the message exchange service, unless a user consciously uses a function of mentioning messages exchanged in the past, it may be difficult to determine a relationship between the original document and the revised version document. Further, even in a state where a relationship between the documents can be determined, in a case where there are a plurality of revised versions, it may be difficult to specify which document is a document to be referred to from among the plurality of documents. Similarly, it may be difficult to specify which message is a message to be referred to from among the messages exchanged in the past.

An object of the present disclosure is to, in a message exchange service, in a case where a plurality of revised version documents are created with respect to a first document designated by a user, perform version management of a document designated by the user from among the revised version documents together with the first document such that a history of revision and a document to be referred to can be visually recognized.

According to a first aspect of the present disclosure, there is provided an information processing apparatus including: a processor configured to: receive, in a message exchange service for exchanging a message and a document attached to the message, designation of a range of target messages from a user; extract documents included in the range, and receive a first document designated by the user from among the extracted documents; present, to the user, second documents that are documents related to the first document from among the extracted documents; and receive a document designated by the user from among the second documents, and perform version management of the designated document together with the first document.

According to a second aspect of the present disclosure, in the information processing apparatus according to the first aspect, the processor may be configured to: specify a storage date and time of the extracted document, and present, to the user, a document having an oldest storage date and time as a candidate of the first document.

According to a third aspect of the present disclosure, in the information processing apparatus according to the first aspect, the processor may be configured to: present, to the user, a document having a file name similar to a file name of the first document as a candidate of the second document.

According to a fourth aspect of the present disclosure, in the information processing apparatus according to the first aspect, the processor may be configured to: present, to the user, messages to which the first document or the second document is attached.

According to a fifth aspect of the present disclosure, in the information processing apparatus according to the fourth aspect, the processor may be configured to: receive a message designated by the user from among the presented messages; and manage the designated message together with the first document and documents as targets of the version management.

According to a sixth aspect of the present disclosure, in the information processing apparatus according to the first aspect, the processor may be configured to: present, to the user, documents that are not targets of the version management among the second documents; and manage a document designated by the user among the presented documents that are not targets of the version management as information representing properties of the first document and documents that are targets of the version management.

According to a seventh aspect of the present disclosure, there is provided a program causing a computer to execute a process including: receiving, in a message exchange service for exchanging a message and a document attached to the message, designation of a range of target messages from a user; extracting documents included in the range, and receiving a first document designated by the user from among the extracted documents; presenting, to the user, second documents that are documents related to the first document from among the extracted documents; and receiving a document designated by the user from among the second documents, and performing version management of the designated document together with the first document.

According to an eighth aspect of the present disclosure, there is provided an information processing method including: receiving, in a message exchange service for exchanging a message and a document attached to the message, designation of a range of target messages from a user; extracting documents included in the range, and receiving a first document designated by the user from among the extracted documents; presenting, to the user, second documents that are documents related to the first document from among the extracted documents; and receiving a document designated by the user from among the second documents, and performing version management of the designated document together with the first document.

According to the first, seventh, and eighth aspects of the present disclosure, in a case where a plurality of revised documents are created with respect to the first document designated by the user, it is possible to visually recognize a history of revision and a document to be referred to.

According to the second aspect of the present disclosure, a candidate of the first document is presented to the user, and thus it is possible to more smoothly perform designation of the first document.

According to the third aspect of the present disclosure, a candidate of the second document is presented to the user, and thus it is possible to more smoothly perform designation of the second document.

According to the fourth and fifth aspects of the present disclosure, it is possible to visually recognize which message is a message to be referred to from among the messages.

According to the sixth aspect of the present disclosure, it is possible to manage a document to be recorded as a property among documents that are not version management targets.

### BRIEF DESCRIPTION OF THE DRAWINGS

Exemplary embodiment(s) of the present invention will be described in detail based on the following figures, wherein:
Fig. 1 is a block diagram illustrating a configuration of an information processing system;
Fig. 2 is a block diagram illustrating a hardware configuration of an information processing apparatus;
Fig. 3 is a flowchart illustrating a flow of processing of the information processing system according to an exemplary embodiment;
Fig. 4 is an explanatory diagram illustrating a processing example according to the exemplary embodiment;
Fig. 5 is an explanatory diagram illustrating a processing example according to the exemplary embodiment;
Fig. 6 is an explanatory diagram illustrating a processing example according to the exemplary embodiment;
Fig. 7 is an explanatory diagram illustrating a processing example according to the exemplary embodiment;
Fig. 8 is an explanatory diagram illustrating a processing example according to the exemplary embodiment;
Fig. 9 is an explanatory diagram illustrating a processing example according to the exemplary embodiment;
Fig. 10 is an explanatory diagram illustrating a processing example according to the exemplary embodiment;
Fig. 11 is an explanatory diagram illustrating a processing example according to the exemplary embodiment; and
Fig. 12 is an explanatory diagram illustrating a processing example according to the exemplary embodiment.

### DETAILED DESCRIPTION OF THE INVENTION

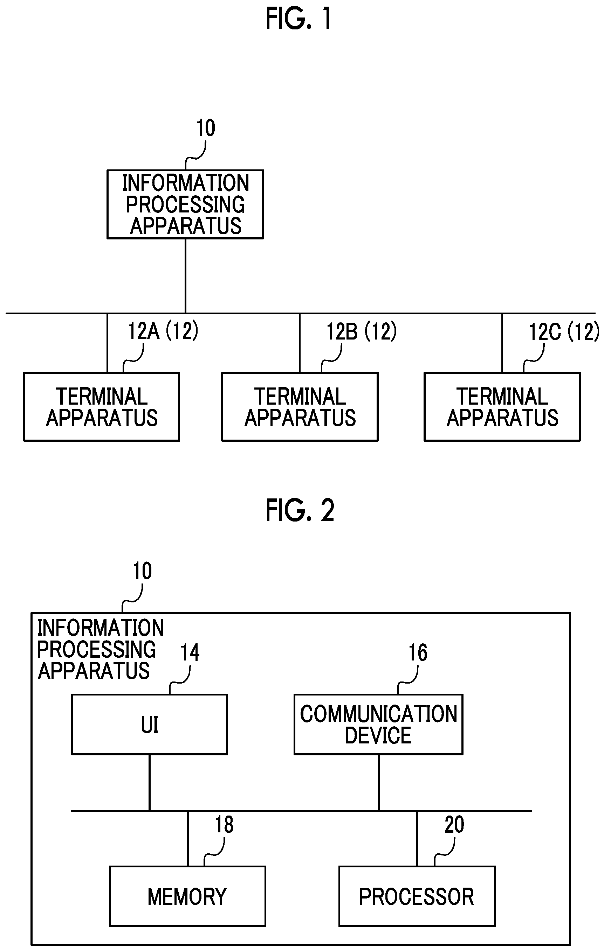

Fig. 1 is a block diagram of an information processing system. In an exemplary embodiment, the information processing system includes an information processing apparatus 10 and a plurality of terminal apparatuses 12A, 12B, and 12C (hereinafter, in a case where a plurality of terminal apparatuses are not particularly distinguished, appropriately referred to as "terminal apparatuses 12"). The information processing apparatus 10 and the terminal apparatus 12 perform communication with each other via a communication path such as the Internet or a local area network (LAN).

The information processing apparatus 10 is, for example, an apparatus such as a personal computer (hereinafter, referred to as a "PC") or a server. The information processing apparatus 10 provides a message exchange service (for example, business chat) in which a plurality of members belonging to a specific group exchange messages with each other. In the exemplary embodiment, the information processing apparatus 10 provides a message exchange service. On the other hand, another apparatus may provide the message exchange service. The "message" exchanged in the message exchange service is information that is input by a user who uses the message exchange service, and an input data format of the message is text information. In a case where a message exchange service utilizing an artificial intelligence robot (for example, a chatbot) is provided, the "message" also includes text information presented to the user by the chatbot. Further, in the message exchange service in the exemplary embodiment, a document attached to the message is exchanged in addition to the message. Here, the "document" is data in any data format, and a data format of the document is not particularly limited. For example, the "document" may be data in a text data format, or may be image data in various image data formats.

The information processing apparatus 10 is an apparatus that performs version management of a document designated by the user together with a first document designated by the user in the message exchange service from among second documents which are documents related to the first document. Hereinafter, the exemplary embodiment will be described assuming that processing related to the version management is performed by the information processing apparatus 10. On the other hand, all or a part of the processing may be executed by another apparatus.

Here, the "first document" designated by the user is one original document (hereinafter, appropriately referred to as "original document" or "root document") among documents attached to the message in a process of exchanging the message. A "related document" refers to a document created by revising the first document among documents included in a range of the messages designated by the user when the information processing apparatus 10 performs processing related to version management. For example, in a case where a plurality of documents a, b, and c exist in a range of the messages designated by the user and the user designates the document a as the first document, both of the other documents b and c are not necessarily related documents of the document a. In a case where the document b is created by revising the document a, the document b is a second document. On the other hand, in a case where the document c is not obtained by revising the document a and is an original document separate from the document a, the document c does not correspond to the second document. Further, although the document b is the second document, unless designated by the user, the document b is merely a "second document that is a document related to the first document" and does not correspond to a document of which "version management is performed together with the first document".

In addition, "version management" is to record an update history of a document and manage the update history on a database in correlation with target information. The version management will be described later while explaining a specific example.

The terminal apparatus 12 is used by a user who uses the message exchange service. The terminal apparatus 12 is, for example, a PC, a tablet PC, a smartphone, or the like. For example, the terminal apparatus 12 includes a communication device, a user interface, a memory, and a processor. The user exchanges messages with members of a specific group on a service screen of the terminal apparatus 12 owned by each user.

Fig. 2 is a block diagram illustrating a hardware configuration of the information processing apparatus according to the exemplary embodiment. The information processing apparatus 10 includes a UI 14, a communication device 16, a memory 18, and a processor 20.

The UI 14 is a user interface, and includes a display and an input device. The display is a liquid crystal display or an EL display. The input device is a keyboard, a mouse, input keys, an operation panel, or the like. The UI 14 may be a UI such as a touch panel including both a display and an input device.

The communication device 16 includes one or a plurality of communication interfaces including a communication chip, a communication circuit, and the like, and has a function of transmitting information to other apparatuses and a function of receiving information from other apparatuses. The communication device 16 may have a wireless communication function such as short-range wireless communication or Wi-Fi (registered trademark), or may have a wired communication function.

The memory 18 is a device that includes one or a plurality of storage areas for storing data. The memory 18 is, for example, a hard disk drive (HDD), a solid state drive (SSD), various types of memory (for example, a RAM, a DRAM, an NVRAM, a ROM, or the like), other storage devices (for example, an optical disk, or the like), or combinations thereof.

The processor 20 controls an operation of each unit of the information processing apparatus 10.

In a case where the user performs designation of a specific document and a specific message by using the terminal apparatus 12, the processor 20 receives the designation via the communication device 16. In addition, the processor 20 performs analysis and extraction of the document and the message related to version management, and presentation to the user. As described above, a series of pieces of processing related to version management may be performed by another apparatus other than the information processing apparatus 10. On the other hand, in the exemplary embodiment, it is assumed that the processor 20 performs a series of pieces of processing related to version management.

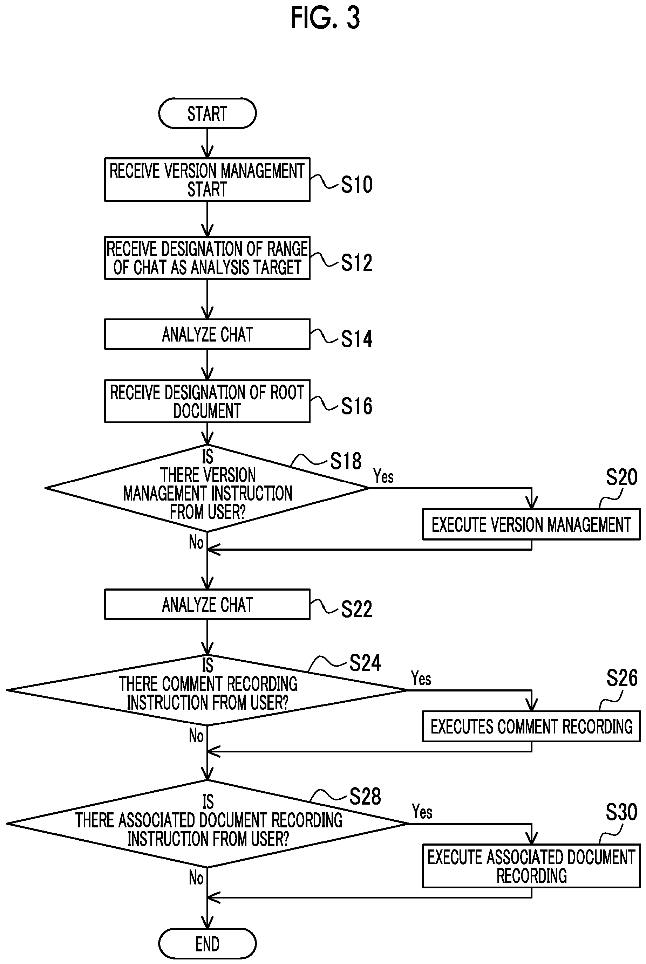

Hereinafter, processing according to the exemplary embodiment will be described with reference to Fig. 3. Fig. 3 is a flowchart illustrating a flow of processing of the information processing system according to the exemplary embodiment. In this example, a case where a user who uses chat, which is one of message exchange services, wants to perform version management of a specific document will be described as an example. The term "chat" refers to a service in which a plurality of members input information and exchange information in real time on a computer network, or an environment for information exchange. The "message" is, for example, a comment in a text data format.

The processor 20 of the information processing apparatus 10 receives a version management start instruction transmitted from the terminal apparatus 12 via the communication device 16 (S10).

In addition, in a case where a version management start instruction is received, the processor 20 presents a target chat candidate (more specifically, a message exchanged in a chat, a thread screen in a chat, or the like) to the user. For example, the processor 20 may transmit information on a screen in order to display a thread screen in a chat that is most recently used by the user on the terminal apparatus 12. Hereinafter, "presenting to the user" refers to a series of pieces of processing of transmitting information such as a screen including an option button or a check box with an option, an input area, and the like to the terminal apparatus 12 and displaying the information on a screen of the terminal apparatus 12 used by the user. In addition, "thread" refers to a collection of exchanges related to one topic or agenda in pieces of information exchanged in the chat service. Generally, in a case where a thread screen is displayed, a collection of exchanges is displayed in a tree shape in chronological order or the like. Next, the processor 20 receives designation of a range of the chat as an analysis target, the designation being transmitted from the terminal apparatus 12 (S12). Here, the "range of the chat" does not mean "a range of exchanges on a computer network and an environment for the exchanges", and refers to "the messages and the documents exchanged in the chat or a partial area including the messages and the documents". For example, as an example of the "range of the chat as an analysis target", a specific thread in which messages and documents are exchanged on one topic or agenda or some messages or documents in the thread may be used.

The processor 20 analyzes the range of the designated chat (more specifically, analyzes information that is input by each member and is exchanged in the range of the designated chat) (S14), extracts an attached document that is exchanged in the range, and presents the extracted document to the user. From among the documents presented in this step, the user designates a root document. For the designation of the root document, when extracting a document in the analysis of step S14, the processor 20 can present only documents that meet a specific condition or emphasize and present documents that meet a specific condition. Examples of the specific condition include a creation date and time of the document. That is, for example, the processor 20 may specify a storage date and time of each extracted document, and may present a document having an oldest storage date and time as a root document candidate.

In a case where the user designates the root document from the presented document, the processor 20 receives the designation of the root document that is transmitted from the terminal apparatus 12 (S16). Here, in general, with regard to version management, a document that is a finally-created result among documents obtained by revising a root document (that is, an original document) may be used as a starting point. On the other hand, in this example, it is assumed that version management is performed by using the root document as a starting point. The number of root documents designated by the user is not limited to one, and may be plural. Here, the "starting point" is the "first document" designated by the user. A plurality of revised versions of the document are created based on the first document. Thus, hereinafter, the first document is appropriately referred to as "starting point".

Next, the processor 20 determines whether or not there is a version management instruction from the user (S 18). Here, prior to the determination in step S 18, the processor 20 may extract in advance, as a document candidate related to the root document, a document having a file name similar to a file name of the root document, and present the extracted document to the user. In a case where there is a version management instruction from the user (that is, in a case where the user selects a document as a version management target) (Yes in S 18), the processor 20 receives the version management instruction from the user, and executes version management (S20). Thereafter, the processing proceeds to step S22. On the other hand, in a case where there is no version management instruction from the user (No in S18), the processing proceeds to step S22.

Next, the processor 20 analyzes the range of the designated chat (S22), extracts a comment candidate related to the selected document, and presents the candidate to the user. Here, the "comment related to the selected document" refers to a message to which the root document or the document designated as a target of version management is attached. In this example, it is assumed that the message to which the selected document is attached is extracted. On the other hand, the extraction is not limited thereto. For example, all messages in the range of the designated chat may be candidates, or only messages including a word such as "update" or "management" that is related to revision of the document may be extracted.

Next, the processor 20 determines whether or not there is a comment recording instruction from the user (S24). In a case where there is a comment recording instruction from the user (that is, in a case where the user designates a specific comment from the related comment candidates which are presented) (Yes in S24), the processor 20 receives the comment recording instruction from the user, and executes comment recording (S26). Here, the "comment recording" refers to registering a specific message designated by the user (for example, a message that a user wants to refer to later so as to understand a history of revision of the document) in a database in correlation with information related to version management. Thereafter, the processing proceeds to step S28. On the other hand, in a case where there is no comment recording instruction from the user (No in S24), the processing proceeds to step S28.

At this stage, the processor 20 may register the message on which the comment recording is executed in the database in correlation with the documents on which version management is executed in step S20 (that is, the root document and the document designated as a version management target by the user).

Next, the processor 20 analyzes the range of the designated chat, extracts a document that is not designated as a version management target by the user, and presents the extracted document to the user. In addition, the processor 20 determines whether or not there is an associated document recording instruction from the user (S28). In a case where there is an associated document recording instruction from the user (that is, in a case where the user designates a specific document from the presented documents) (Yes in S28), the processor 20 receives the associated document recording instruction from the user, and executes associated document recording (S30). Here, the "associated document recording" refers to registering a specific document designated by the user (for example, a document that is not a version management target but may be useful to be referred to so as to understand a history of revision of the document) in the database in correlation with information related to version management. In a case where there is no associated document recording instruction from the user (No in S28), or after processing of step S30, the processor 20 ends the series of pieces of processing.

In a stage of step S30, the processor 20 may register the document on which the associated document recording is executed in the database in correlation with the documents on which version management is executed in step S20 (that is, the root document and the document designated as a version management target by the user). Thereby, the document on which the associated document recording is executed is managed as information representing a property of the document on which version management is executed (that is, data representing a property of a target document, hereinafter, appropriately referred to as a "property"). In addition, in a stage at the end of the series of pieces of processing, the processor 20 may register a document as a version management target, a comment as a comment recording target, and a document as an associated document recording target in the database in correlation with each other. The database for managing information related to version management will be described later.

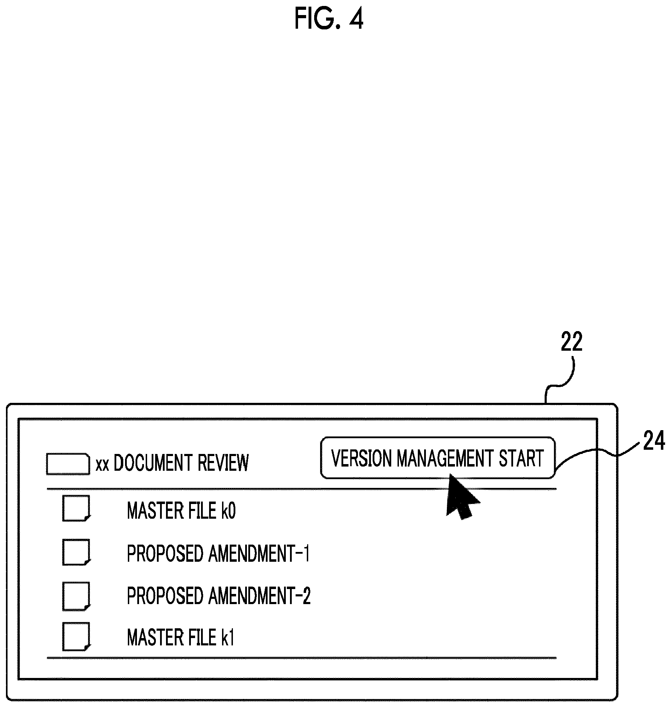

Next, a processing example by the processor 20 that is illustrated in Fig. 3 will be further described with reference to Fig. 4 to Fig. 12. Fig. 4 to Fig. 12 are explanatory diagrams illustrating processing examples according to the exemplary embodiment. Specifically, Fig. 4 to Fig. 12 illustrate an example of processing such as selection, extraction, and the like for performing version management of a specification created by users A, B, and C as members of a specific group while the users A, B, and C discuss on the message exchange service.

Fig. 4 illustrates a display example of a document review screen 22 in the message exchange service. The document review screen 22 illustrated in Fig. 4 is displayed on a screen of the terminal apparatus 12 used by the user who performs version management. In a case where a user performs an instruction on the screen by operating the terminal apparatus 12 to perform version management, information indicating the instruction is transmitted from the terminal apparatus 12 to the information processing apparatus 10. The processor 20 receives the information indicating the instruction. Hereinafter, the same applies to each drawing. The document review screen 22 is, for example, one screen in the chat used by the users A, B, and C, and is a screen displayed by the processor 20 in response to an operation instruction of the user. As illustrated in Fig. 4, on the document review screen 22, file names of four documents (specifically, documents "master file k0", "proposed amendment-1", "proposed amendment-2", and "master file k1") and a version management start button 24 are displayed, the documents being created by the users A, B, and C in a thread of a specific chat (that is, in a thread in which discussion for creating the specification is performed). In this example, a case where the user A wants to perform version management of the specification will be described as an example. As will be described later, the "master file k0" illustrated in Fig. 4 is a root document, and the "master file k1" is a specification created as a final result.

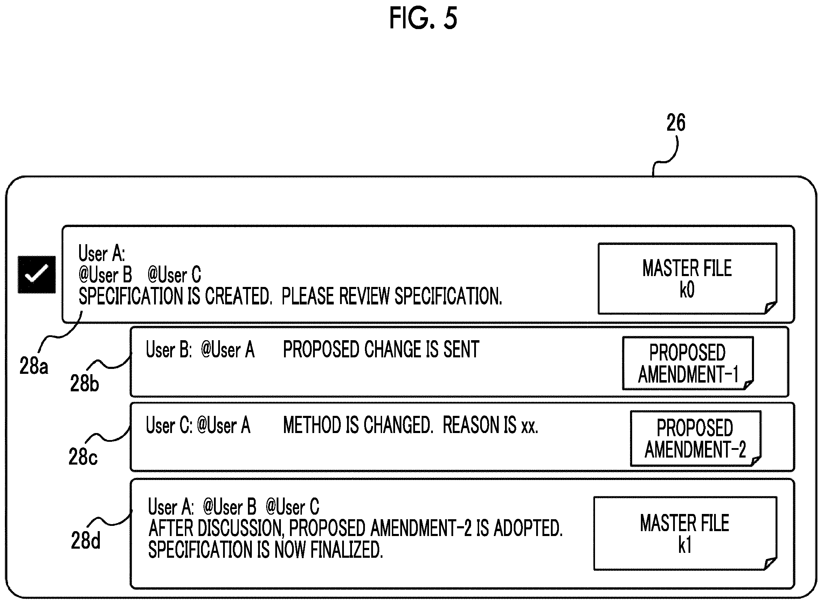

In a case where the version management start button 24 illustrated in Fig. 4 is pressed, the processor 20 receives a version management start instruction, and presents a target chat (more specifically, a thread screen in the chat) to the user A. Hereinafter, "presenting to the user A" refers to a series of pieces of processing of transmitting information such as a screen including an option button or a check box with an option, an input area, and the like to the terminal apparatus 12 (specifically, the terminal apparatus 12A used by the user A as illustrated in Fig. 1) and displaying the information on a screen. An example of the thread screen presented here is a selection screen 26 illustrated in Fig. 5.

On the selection screen 26 of Fig. 5, a message in a thread in which a discussion for creating the specification is performed is displayed. In Fig. 5, starting with a message 28a posted in the chat by the user A at the top, three messages 28b, 28c, and 28d are displayed on the selection screen 26. The four messages 28a to 28d displayed on the selection screen 26 are arranged and displayed in order in which the messages are posted. That is, each message is displayed in chronological order from the top to the bottom of the selection screen 26. In other words, Fig. 5 illustrates a state where, in a chat in which the users A, B, and C participate, one thread is formed and messages are exchanged between the users. For example, the message 28a at the top of the selection screen 26 and the document "master file k0" are displayed in one frame. This indicates that the document "master file k0" is attached when the user A posts the message 28a, and the message 28a and the document "master file k0" are correlated with each other by the display in the one frame. Here, for example, in a case where the user A selects the message 28a on the selection screen 26, an image indicating that the message 28a is selected (for example, a check box with a check mark illustrated on a left side of the message 28a) is displayed. In this way, by referring to the selection screen 26, the user A can visually recognize the messages exchanged and the documents attached to each message in the thread of the chat as an analysis target. Further, the check box with a check mark is displayed as described above, and thus the user A can select a range of messages (and documents attached to the messages) as analysis targets while confirming the messages on the screen. The user A selects a message required for version management of the specification on the presented selection screen 26. In other words, a range of messages (and documents attached to the messages) as analysis targets is selected in the presented selection screen 26. In the example illustrated in Fig. 5, the user A selects the message 28a at the top on the selection screen 26. On the other hand, the selection is not limited thereto. For example, the messages may be selected one by one as in this example, or by clicking any one portion on a screen that displays a thread including a plurality of messages, all the messages included in the thread may be collectively selected.

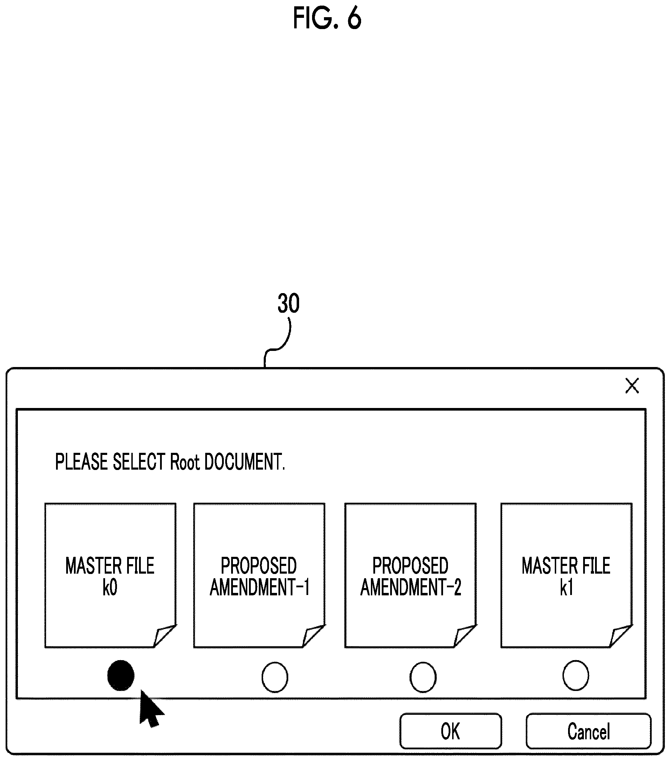

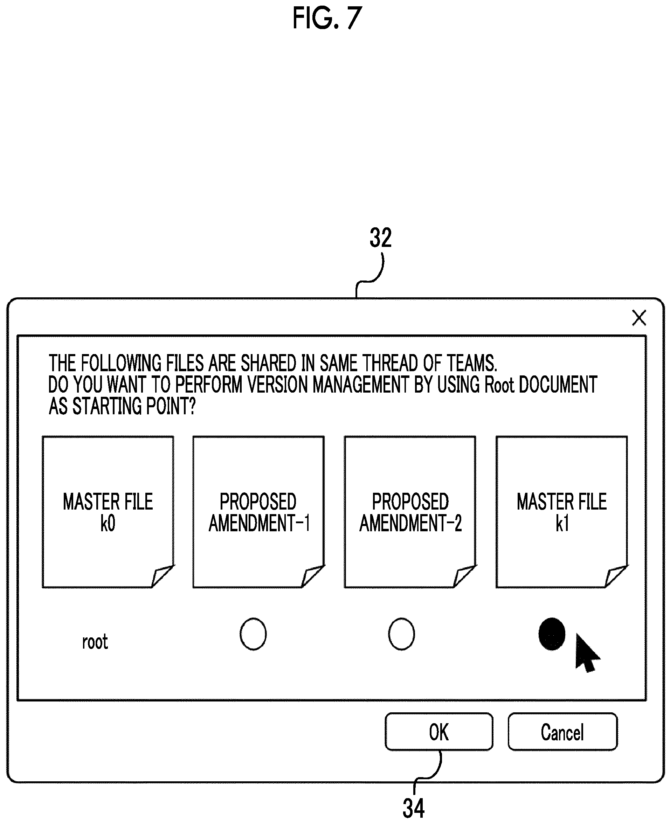

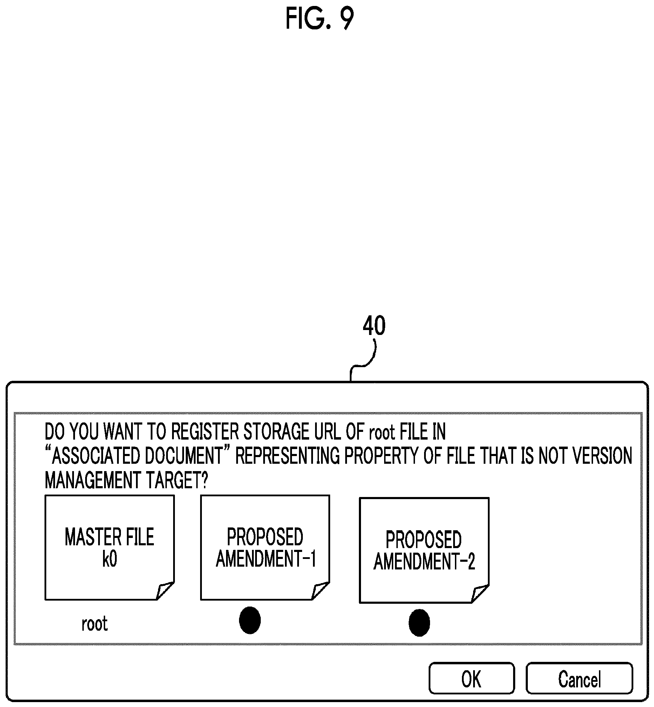

Next, in a case where a message as an analysis target or a range including a plurality of messages (hereinafter, collectively referred to as a "range of messages") is selected, the processor 20 analyzes the range of the designated messages, extracts a document included in the range, and presents the extracted document to the user A. For example, in a case where all the messages in the thread illustrated in Fig. 5 are selected, each document attached to these messages is extracted. Fig. 6 illustrates a selection screen 30 for displaying four documents extracted by processing of the processor 20 (specifically, documents "master file k0", "proposed amendment-1", "proposed amendment-2", and "master file k1"). On the selection screen 30, the user A designates a root document. In this example, "master file k0" is selected as a root document. As illustrated in Fig. 6, the processor 20 displays an option button displayed below the document "master file k0" in black such that the document selected as a root document can be visually recognized. Hereinafter, the same applies to Fig. 7 and Fig. 9.

Next, in a case where a selection of the root document is received, the processor 20 causes the user A to select whether or not to perform version management by using the root document as a starting point. An example of the selection screen is a selection screen 32 illustrated in Fig. 7. In a case where the user A wants to perform version management by using the root document as a starting point, the user A selects a document as a version management target from the presented documents, and presses an OK button 34. In this example, "master file k1" is selected as the document as a version management target. The processor 20 receives the version management instruction from the user A, and executes version management.

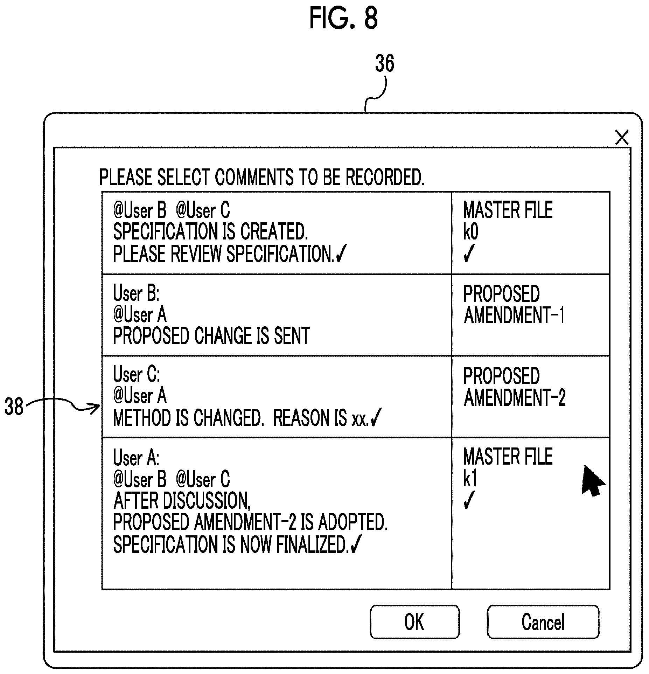

Next, the processor 20 displays a selection screen 36 illustrated in Fig. 8. On the selection screen 36, a comment is displayed in a left column, and a file name of a document attached to the comment on the left column is displayed in a right column. As illustrated in Fig. 8, the processor 20 analyzes a range of the designated messages, extracts all the messages (that is, the comments) and the attached documents, and presents the extracted messages and documents to the user. This presentation is performed to allow the user A to select a comment to be recorded. In addition, the user A selects a comment and a document that are to be recorded. In Fig. 8, an image (for example, a check mark) indicating that selection is performed is displayed in the vicinity of the selected comment and the selected document. Here, in this example, a comment 38 of the user C to which a document that is not a version management target (that is, the document "proposed amendment-2") is attached is also selected. In this way, it is possible to manage the comment to which the document that is not a version management target is attached. Thus, it is possible to visually recognize the comment to be referred to later so as to understand a history of revision of the document. In addition, the processor 20 receives designation of comment recording from the user, and executes comment recording.

Next, the processor 20 displays another selection screen 40 illustrated in Fig. 9. As illustrated in Fig. 9, the processor 20 analyzes the range of the designated messages, extracts a document that is not designated as a version management target, and presents the extracted document to the user. In this example, the root document is displayed on the selection screen 40 together with documents that are not version management targets. In addition, in this example, documents "proposed amendment-1" and "proposed amendment-2" are selected by the user A. In a case where the documents are selected in this manner, the processor 20 manages the two documents as associated documents (that is, registers pieces of target information in correlation with each other in the database). Here, the "associated document" is a concept different from the "related document" which is the "document created by revising the root document". That is, the "associated document" refers to a document that is designated by the user among documents which are not version management targets and is managed as information representing properties of the root document and documents which are version management targets. In a case where designation of the associated document recording from the user is received, the processor 20 executes associated document recording. By executing the associated document recording, the processor 20 can manage a document to be recorded as a property among the documents that are not version management targets. That is, although the documents "proposed amendment-1" and "proposed amendment-2" are not managed as revised versions, these two documents can be visually recognized. As a result, the reason why revision is performed can be recognized by referring to the documents "proposed amendment-1" and "proposed amendment-2" even after a lapse of time. As described above, the document selected as the associated document can be used as complementary information in revision of documents.

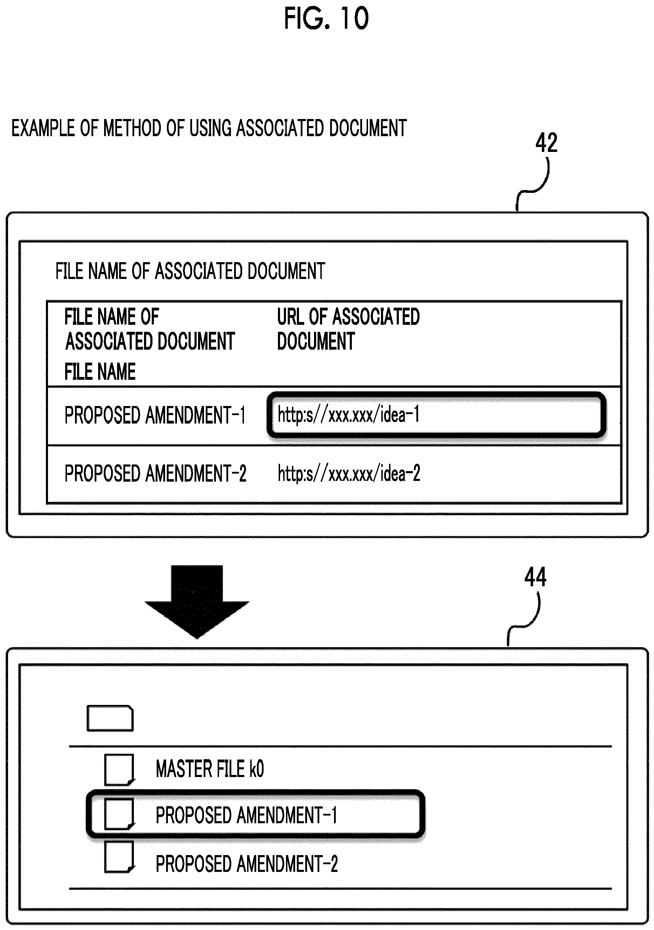

Fig. 10 illustrates an example of using the associated document in a case where the associated document recording is executed. On a screen 42 of Fig. 10, information recorded as the associated documents is displayed. Specifically, the file names of the documents "proposed amendment-1" and "proposed amendment-2" selected as associated documents are displayed on a left side of the screen 42, and URLs in which the documents are stored are respectively displayed in correlation with the documents on a right side of the screen 42. Here, for example, a case where the screen 42 is presented to the user A will be described. First, the user A selects the URL correlated with the document "proposed amendment-1" on the screen 42. On the screen 42, the URL is surrounded by a thick line, which indicates that the URL is selected (that is, clicked by the user A) on the screen 42. In a case where selection of the URL is received, the processor 20 newly displays a screen 44. The screen 44 displays a folder in which the document "proposed amendment-1" is stored. In this example, in the folder displayed on the screen 44, not only the document "proposed amendment-1" but also other documents stored in the same folder are displayed. Therefore, as illustrated on the screen 44, for example, the processor 20 may display the document surrounded by a thick line. In this way, the URL in which the associated document is stored is managed as information to be displayed on the screen 42, and thus the associated document can be easily referred to. Therefore, it is possible to use documents that are not version management targets so as to understand a history of revision of the document.

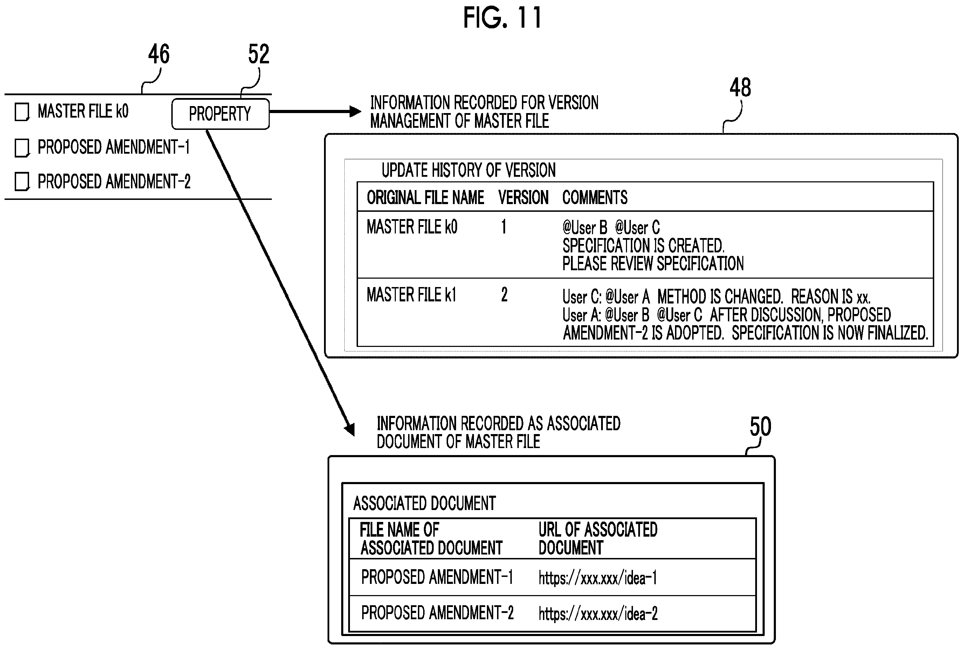

Fig. 11 is an example of information created by a series of pieces of version management processing described with reference to Fig. 4 to Fig. 9. Fig. 11 illustrates a screen 46 displayed on the terminal apparatus 12 by the processor 20, information 48, and information 50. As illustrated in Fig. 11, the "master file", which is a document as a version management target, is displayed on the screen 46 from among pieces of information created by the series of pieces of processing. The "master file" is a name given as a new file name by the processor 20 in a case of registering "master file k0" which is a root document and "master file k1" selected as a version management target document by the user in a database for version management. Thus, for example, in a case where the "master file" is clicked, the document "master file k1", which is a specification created as a final result, is opened (not illustrated). In addition, a "property button" 52, which is a button for displaying an property of the document, is displayed in the vicinity of the "master file" displayed on the screen 46. In addition, on the screen 46 of Fig. 11, in addition to the "master file", documents other than the version management targets are also displayed such that the documents are distinguished from two documents "master file k0" and "master file k1" which are version management target documents. In a case where the user A clicks the property button 52, the information 48 which is information recorded for version management and the information 50 which is information recorded as the associated document are displayed. More specifically, on the screen 46 of Fig. 11, in a case where the property button 52 next to an item "master file" is clicked, as the information 48 recorded for version management, "master file k0" which is a root document and "master file k1" selected as a version management target document by the user A are displayed. Further, next to the file name, the version of the revised document is displayed, and the comment for which comment recording is designated by the user A is also displayed. On the other hand, the information 50 recorded as the associated document is also displayed separately from the version management information. Since the information 50 illustrated in Fig. 11 is the same as the information displayed on the screen 42 in Fig. 10, description thereof will be omitted here.

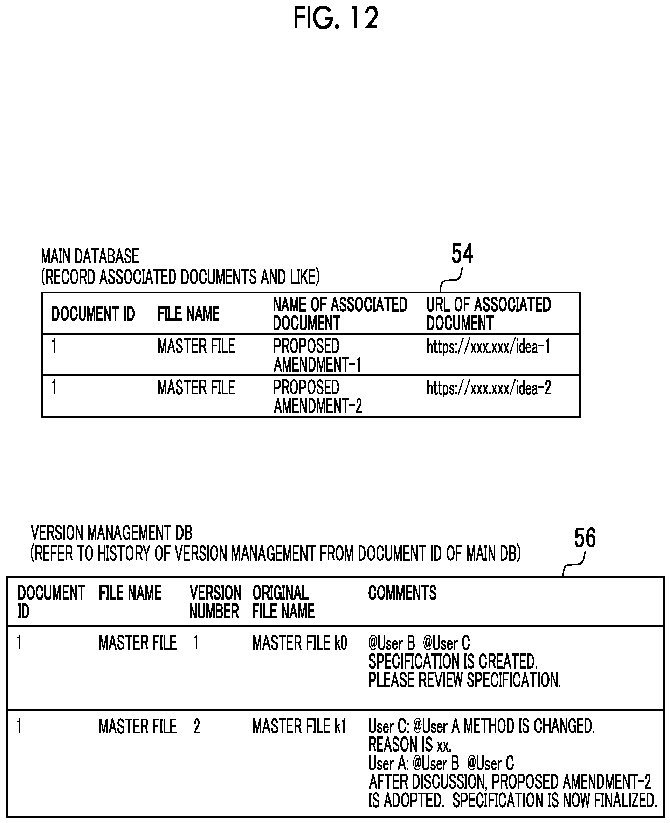

Fig. 12 illustrates an example of a database that is a basis of Fig. 11 and is managed by the processor 20. Fig. 12 illustrates two DBs including databases (DB) 54 and 56. The information illustrated in Fig. 12 is stored in the memory 18. The DB 54 is a DB in which pieces of major information are registered among DBs created by executing version management, comment recording, and associated document recording by the processor 20 described above. For example, as the pieces of major information, a document ID is assigned to each of the version management target documents, and a file name, an associated document name, and information indicating a URL in which the associated document is stored are correlated with each other for each document ID. These pieces of information are registered in the DB 54 in advance by the processor 20. The DB 56 is, in particular, a DB in which documents as version management targets and comments are registered in correlation with each other among the DBs created by the pieces of processing executed by the processor 20. That is, pieces of information on documents as version management targets and messages are registered in the DB 56, and the information is used to understand a history of revision or to refer to a document to be referred to. Specifically, a document ID is assigned to each of the version management target documents, and a file name, a version number, a file name of a root document, and a comment are correlated with each other for each document ID. These pieces of information are also registered in the DB 56 in advance by the processor 20. In the DB 56, the version number refers to a number indicating whether the version management target document (in the DB 56, the two documents "master file k0" and "master file k1" correlated with the file name "master file") is a root document or a version document obtained by revising the root document. As illustrated in the DB 56, the document "master file k0" is a root document as described above, and thus the version number is "1". In addition, the document "master file k1" is a specification created as a final result. In this example, there are two documents as version management targets, and thus the version number is "2". In this example, the information 48 in Fig. 11 is created as a property based on the DB 56 in Fig. 12.

In the message exchange service, in a case where a plurality of revised version documents are created with respect to the first document designated by the user by the series of pieces of version management processing described above, it is possible to visually recognize a history of revision and the document to be referred to. Further, it is possible to manage documents other than the version management targets as associated documents as needed by the user.

The functions of the information processing apparatus 10 are implemented by cooperation of hardware and software, as an example. For example, in a case where the processor reads and executes the program stored in the memory of each apparatus, the functions of each apparatus are implemented. The program is stored in the memory via a recording medium such as a CD or DVD, or via a communication path such as a network.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). In the embodiments above, the term "processor" is broad enough to encompass one processor or plural processors in collaboration which are located physically apart from each other but may work cooperatively. The order of operations of the processor is not limited to one described in the embodiments above, and may be changed.

### Supplementary Note

(((1))) An information processing apparatus comprising:
   a processor configured to:
   receive, in a message exchange service for exchanging a message and a document attached to the message, designation of a range of target messages from a user;
   extract documents included in the range, and receive a first document designated by the user from among the extracted documents;
   present, to the user, second documents that are documents related to the first document from among the extracted documents; and
   receive a document designated by the user from among the second documents, and perform version management of the designated document together with the first document.
(((2))) The information processing apparatus according to (((1))), wherein the processor is configured to:
   specify a storage date and time of the extracted document, and present, to the user, a document having an oldest storage date and time as a candidate of the first document.
(((3))) The information processing apparatus according to (((1))), wherein the processor is configured to:
   present, to the user, a document having a file name similar to a file name of the first document as a candidate of the second document.
(((4))) The information processing apparatus according to (((1))), wherein the processor is configured to:
   present, to the user, messages to which the first document or the second document is attached.
(((5))) The information processing apparatus according to (((4))), wherein the processor is configured to:
   receive a message designated by the user from among the presented messages; and
   manage the designated message together with the first document and documents as targets of the version management.
(((6))) The information processing apparatus according to (((1))), wherein the processor is configured to:
   present, to the user, documents that are not targets of the version management among the second documents; and
   manage a document designated by the user among the presented documents that are not targets of the version management as information representing properties of the first document and documents that are targets of the version management.
(((7))) A program causing a computer to execute a process comprising:
   receiving, in a message exchange service for exchanging a message and a document attached to the message, designation of a range of target messages from a user;
   extracting documents included in the range, and receiving a first document designated by the user from among the extracted documents;
   presenting, to the user, second documents that are documents related to the first document from among the extracted documents; and
   receiving a document designated by the user from among the second documents, and performing version management of the designated document together with the first document.

According to the information processing apparatus according to (((1))) and the program according to (((7))), in a case where a plurality of revised documents are created with respect to the first document designated by the user, it is possible to visually recognize a history of revision and a document to be referred to.

According to the information processing apparatus according to (((2))), a candidate of the first document is presented to the user, and thus it is possible to more smoothly perform designation of the first document.

According to the information processing apparatus according to (((3))), a candidate of the second document is presented to the user, and thus it is possible to more smoothly perform designation of the second document.

According to the information processing apparatus according to (((4))) and (((5))), it is possible to visually recognize which message is a message to be referred to from among the messages.

According to the information processing apparatus according to (((6))), it is possible to manage a document to be recorded as a property among documents that are not version management targets.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: information processing apparatus
12: terminal apparatus
14: UI
16: communication device
18: memory
20: processor

## Claims

1. An information processing apparatus comprising:
a processor configured to:
receive, in a message exchange service for exchanging a message and a document attached to the message, designation of a range of target messages from a user;
extract documents included in the range, and receive a first document designated by the user from among the extracted documents;
present, to the user, second documents that are documents related to the first document from among the extracted documents; and
receive a document designated by the user from among the second documents, and perform version management of the designated document together with the first document.

2. The information processing apparatus according to claim 1, wherein the processor is configured to:
specify a storage date and time of the extracted document, and present, to the user, a document having an oldest storage date and time as a candidate of the first document.

3. The information processing apparatus according to claim 1, wherein the processor is configured to:
present, to the user, a document having a file name similar to a file name of the first document as a candidate of the second document.

4. The information processing apparatus according to claim 1, wherein the processor is configured to:
present, to the user, messages to which the first document or the second document is attached.

5. The information processing apparatus according to claim 4, wherein the processor is configured to:
receive a message designated by the user from among the presented messages; and
manage the designated message together with the first document and documents as targets of the version management.

6. The information processing apparatus according to claim 1, wherein the processor is configured to:
present, to the user, documents that are not targets of the version management among the second documents; and
manage a document designated by the user among the presented documents that are not targets of the version management as information representing properties of the first document and documents that are targets of the version management.

7. A program causing a computer to execute a process comprising:
receiving, in a message exchange service for exchanging a message and a document attached to the message, designation of a range of target messages from a user;
extracting documents included in the range, and receiving a first document designated by the user from among the extracted documents;
presenting, to the user, second documents that are documents related to the first document from among the extracted documents; and
receiving a document designated by the user from among the second documents, and performing version management of the designated document together with the first document.

8. An information processing method comprising:
receiving, in a message exchange service for exchanging a message and a document attached to the message, designation of a range of target messages from a user;
extracting documents included in the range, and receiving a first document designated by the user from among the extracted documents;
presenting, to the user, second documents that are documents related to the first document from among the extracted documents; and
receiving a document designated by the user from among the second documents, and performing version management of the designated document together with the first document.
